# EUROPÄISCHE PATENTSCHRIFT

(11) **EP 1 797 402 B1**
(45) Veröffentlichungstag und Bekanntmachung des Hinweises auf die Patenterteilung: **28.04.2021**
(21) Anmeldenummer: 05797246.5
(22) Anmeldetag: 02.10.2005
(51) Int. Cl.: A01J 5/01, G01F 1/56, G01C 9/06, G01C 9/20, G01F 1/52, G01F 1/74, G01F 1/86, G01F 23/00, G01F 23/24

(54) **VORRICHTUNG ZUR MESSUNG DES MILCHMASSENSTROMS INSBESONDERE WÄHREND DES MELKVORGANGS**
DEVICE FOR MEASURING THE MASS FLOW OF MILK IN PARTICULAR DURING THE MILKING PROCESS
SYSTEME SERVANT A MESURER LE DEBIT MASSIQUE DU LAIT, EN PARTICULIER PENDANT LE PROCESSUS DE TRAITE

(30) Priorität: 05.10.2004 DE 102004048746
(43) Veröffentlichungstag der Anmeldung: 20.06.2007
(73) Patentinhaber: GEA WestfaliaSurge GmbH, 59199 Bönen (DE)
(72) Erfinder: KRONE, Otto, 49479 Ibbenbüren (DE); SPRINGER, Andreas, 59269 Beckum (DE)
(74) Vertreter: BSB Patentanwälte Schütte & Engelen Partnerschaft mbB
(86) Internationale Anmeldenummer: PCT/EP2005/010638
(87) Internationale Veröffentlichungsnummer: WO 2006/037589

(56) Entgegenhaltungen:
- EP-A- 0 536 080
- EP-A- 1 396 706
- US-A- 4 391 222
- US-A- 4 452 176

## Beschreibung

Die Erfindung betrifft eine Vorrichtung zur Messung des Milchmassenstroms, insbesondere während des Melkvorgangs. Die Erfindung ist grundsätzlich zur Bestimmung des Milchmassenstroms von Kühen, Schafen, Ziegen, Büffeln, Lamas, Kamelen, Dromedaren oder von sonstigen milchgebenden Säugetieren geeignet und wird im Folgenden beispielhaft mit Bezug auf das Melken von Kühen beschrieben.

Darüber hinaus kann die Erfindung auch in anderen Anwendungsgebieten eingesetzt werden, bei denen ein Messen von Massenströmen von Schaum enthaltenden bzw. bildenden Flüssigkeiten eine Rolle spielt, wie beispielsweise bei der Messung des Massenstromes von Bier, Limonade, Fruchtsäften oder weiteren vergleichbaren Lebensmitteln, sowie anderen technischen Flüssigkeiten, die schäumen oder Schaum enthalten, wie z.B. Galvanisierflüssigkeiten.

Zur Steuerung des Melkprozesses ist die Kenntnis des aktuellen Milchflusses vorteilhaft, um z.B. den Übergang von der Stimulationsphase in die Hauptmelkphase, oder um den Abnahmezeitpunkt festzulegen, oder um sonstige Parameter während des Melkens anzupassen. Eine hohe Genauigkeit ist dafür grundsätzlich nicht erforderlich, aber wünschenswert.

Die Milchmengenmessung ist weiterhin von Bedeutung, um hieraus Rückschlüsse auf das Leistungsvermögen der einzelnen Kühe ziehen zu können. Die Milchmenge kann durch eine Integration des Milchmassenstroms während des Melkens gewonnen werden. Günstig ist es, wenn die Genauigkeiten den Anforderungen der ICAR genügt, da dann eine regelmäßige separate Milchmengenmessung unterbleiben kann. Die Anforderungen für eine Zulassung durch ICAR (Internationales Komitee für Leistungsprüfungen in der Tierproduktion) hängen von der Tierart und weiteren Parametern ab, sind aber generell hoch. So beträgt der zulässige Fehler bei der Milchmengenmessung bei Kühen und einer Gemelksmenge größer 10 kg maximal 2 Prozent mit einer Standardabweichung von 2,5 %. Für eine grundsätzliche Beurteilung des Leistungsvermögens oder für eine Steuerung des Melkprozesses ist eine derartige Genauigkeit bei der Bestimmung des aktuellen Massenstroms in der Regel aber nicht erforderlich.

Ein Vorteil der Messung des Milchmassenstromes ist, dass im Einzelfall über den Verlauf der Milchkurve beim Melken oder auch über die Milchmenge insgesamt auch ein Rückschluss auf den Gesundheitszustand des Tieres getroffen werden kann.

Ein Problem bei der Milchstrommessung besteht darin, dass Milch ein stark schäumendes Fluid ist. Die Schaumbildung beim Melken wird außerdem noch durch die gängigen Melktechniken begünstigt, da in der Regel in das Milchsammelstück und/oder die Zitzenbecher beim Melken periodisch oder kontinuierlich Luft eingelassen wird, um die ermolkene Milch abzutransportieren. Das pro Zeiteinheit eingelassene Luftvolumen kann variieren, beträgt aber in der Regel etwa 8 Liter Luft/Minute oder sogar mehr. Bei einem maximalen Milchfluss bei z.B. Kühen von etwa 10 oder 12 Liter Milch pro Minute in der Hauptmelkphase stellt der abzutransportierende Luftanteil grob gerechnet also wenigstens etwa 25 %, insbesondere wenigstens 40 % oder sogar 50 % des Volumenstroms von ermolkener Milch und eingelassener Luft dar. Und dieser ganz erhebliche Anteil liegt schon während der Phase des größten Milchflusses vor. Zum Ende des Melkens steigt der Anteil an abzutransportierender Luft aufgrund des nachlassenden Milchflusses dementsprechend noch weiter an. Außerdem kommt noch der Luftanteil hinzu, der am Melkbecher durch Undichtigkeiten zwischen Zitzengummi und Zitze bedingt eintritt. Dieser Anteil kann ebenfalls grob mit z.B. 10 Liter Luft pro Minute abgeschätzt werden. Der erhebliche Luftanteil des abzutransportierenden Luft- und Fluidgemisches kann deshalb zu einer erheblichen Schaumbildung führen, was die Messung des Milchstroms im Durchfluss bedeutend erschwert.

Da durch den Schaumanteil bedingt nicht einfach von einem Volumen auf die Masse geschlossen werden kann, ist die Genauigkeit von Milchmengenmessverfahren über ein Volumenmessverfahren oft eingeschränkt. Sowohl der Luftanteil im Fluid als auch die Blasengröße des Schaums sind nicht immer gleich, sondern sind von einer Vielzahl von Faktoren abhängig. Solche Faktoren sind beispielsweise die Milchtemperatur, die Milchdurchflussmenge, die Lage und Führung der Milchschläuche, die Art des Melkzeuges, der Zitzengummityp, der Melkschlauchdurchmesser, der Melkanlagentyp, die Vakuumhöhe und die Pulsfrequenz beim Melken, Leckluft bzw. Lufteinbrüche, die aktuelle Eutergesundheit, tierindividuelle Unterschiede bei den einzelnen Kühen aufgrund z.B. des Laktationsstandes oder der Kuhrasse, sowie aufgrund von Unterschieden bei der Art und der Menge der Fütterung etc..

Ein weiteres Problem beim Messen des Milchmengenstroms wird durch den periodischen Milchfluss hervorgerufen. Im Unterschied zur Messung des Mengenstroms bei vielen anderen Anwendungen, wird beim Melken die Milch periodisch abgemolken. Der Zitzenraum des Melkbechers wird einem periodischen Vakuum ausgesetzt, so dass der Milchfluss etwa im Pulsationstakt aus der Zitze austritt. Die Pulsfrequenz liegt typischerweise zwischen etwa 30 und 90 bei z.B. 60 Zyklen pro Minute. Bei vier Zitzen und Gleichtakt aller Zitzen ergibt das einen Milchstrom mit etwa 60 Milchstromimpulsen pro Minute. Bei unterschiedlicher Annsteuerung der Euterhälften oder der vier Zitzen z.B. einer Kuh kann der hochfrequente Anteil des Milchstroms auf bis zu etwa 240 Takte pro Minute bei einer 60iger Pulsfrequenz ansteigen. Oftmals wird die Milch propfenweise durch die Milchschläuche transportiert, so dass kurze Phasen mit maximalem mit kurzen Phasen mit minimalem Milchfluss abwechseln. Eine Bestimmung des aktuellen Milchflusses ist unter diesen Bedingungen schwierig.

Aufgrund solcher Einflüsse erweist sich die Messung eines Milchstromes bzw. Milchmassenstromes als schwierig, da die Art und Zusammensetzung der Schaumphase einerseits, anderseits aber auch die Zusammensetzung und Beschaffenheit der flüssigen Phase innerhalb eines Melkvorgangs sowie von Melkvorgang zu Melkvorgang Schwankungen unterworfen sind. So kann sich z.B. die elektrische Leitfähigkeit des Fluids und der Anteil der Schaumphase ständig ändern, da sich z.B. der Fettanteil während des Melkens ändert, was zu Schwankungen hinsichtlich der elektrischen Leitfähigkeit und auch der optischen Eigenschaften der Milch führt. Auf der Messung solcher Parameter beruhende Messverfahren können somit erheblichen Ungenauigkeiten unterworfen sein.

Anstatt der Massenstrommessung über eine Volumenmessung sind deshalb Messverfahren und Messvorrichtungen bekannt geworden, welche die Dichte des Fluids berücksichtigen. Dazu können Messungen des elektrischen, optischen oder z.B. akustischen Widerstands im Durchfluss durchgeführt werden.

Aus der EP 0 536 080 A2 ist eine Milchstrommessung im Durchfluss bekannt, bei der Milch durch Strömungskanäle geleitet wird und die Transmission eines infraroten Lichtstrahls durch die Milch gemessen und ausgewertet wird. Aus der momentanen Dämpfung bzw. Schwächung des infraroten Lichtstrahls durch den von Milch durchflossenen Kanal wird auf den momentanen Massenstrom der Milch durch diesen Kanal geschlossen. Ein Nachteil bei der optischen Vermessung ist z.B., dass an kleinen und größeren Schaumbläschen und Schaumblasen der zur Messung verwendete Lichtstrahl gestreut werden kann, so dass, wenn ein Schaumanteil vorhanden ist, bei einer Transmissions- oder auch bei einer Reflexionsmessung zu wenig Licht gemessen werden kann, wodurch Messverfälschungen hervorgerufen werden können.

Aus der DE 37 37 607 A1 ist ein weiteres Verfahren und eine Vorrichtung zur Messung des Milchstromes im Durchfluss bekannt. Eine Vielzahl übereinander angeordneter Elektroden ist vorgesehen, um zunächst den elektrischen Widerstand bzw. die elektrische Leitfähigkeit des Flüssigkeits- und Luftgemisches auf den jeweiligen Höhenniveaus mit Hilfe der Elektroden zu bestimmen. Im Bodenbereich wird ein Referenzleitwert der aktuell vorbeifließenden Flüssigkeit gemessen. Aus den jeweiligen Höhenwerten wird mittels des Referenzleitwertes das stufenförmige Höhenprofil des spezifischen Widerstands berechnet. Aus Kalibriermessungen ist bei bekannten Widerstandsprofilen die Strömungsgeschwindigkeit der abfließenden Flüssigkeit bekannt, so dass aus dem stufenförmigen Höhenprofil auf die strömende Masse der Milch geschlossen werden kann. Prinzipbedingt ist bei dieser bekannten Vorrichtung der mechanische und elektronische Aufwand groß Weitere Vorrichtungen zur Messung von schäumenden Flüssigkeiten sind aus der US 4 452 176 A und der EP 1 396 706 A bekannt.

Ein weiteres grundsätzliches Problem bei der Messung des Massenstromes eines schäumenden Fluids über ein solches Dichteprofil oder eine Füllstandshöhe ist, dass sich Schaumbläschen im Messbereich ansammeln und dort festsetzen können, ohne dass der Schaumanteil abtransportiert wird. Durch den stehenden Schaum können Messfehler bedingt werden.

Wenn z.B. stehender Schaum im Messbereich vorhanden ist und der elektrische Widerstand zwischen zwei Elektroden oder der optische Widerstand zwischen Sender und Empfänger oder die akustische Dämpfung oder dergleichen gemessen wird, um den Füllstand bzw. das Höhenprofil der Dichte vor einer Blende zu bestimmen, dann wird der stehende Schaumanteil bei jeder Messung mitberücksichtigt. Der derart gemessene Füllstand ist höher als der Füllstand des real fließenden Fluids. Ein Zurückgreifen auf den Kalibrierungswert bei diesem Füllstand liefert dann einen fehlerbehafteten Massenstrom. In diesem Beispiel wird ein größerer Wert für den Massenstrom gemessen, als real fließt, da der anliegende Messwert durch den angestauten und hier im Beispiel stehenden Schaumanteil größer ist. Ein weiterer Messfehler entsteht, wenn sich soviel Schaum ansammelt, dass der stehende Schaum auf das fließende Fluid drückt und so die Strömungsgeschwindigkeit erhöht. Als Folge stimmt die angenommene Strömungsgeschwindigkeit nicht mehr mit der Strömungsgeschwindigkeit bei der Kalibrierung überein und die Messung des Massenstroms wird fehlerbehaftet. Ein solcher Fehler kann insbesondere dann entstehen, wenn ein großer Teil des freien Strömungsquerschnittes mit Schaum angefüllt ist.

Im Stand der Technik ist es zur Vermeidung von Messungenauigkeiten durch stehenden Schaum, der auf die Messflüssigkeit drückt, bekannt geworden, vor dem Messbereich einen Ausdehnungsraum zur Aufnahme einer großen Schaummenge anzuordnen. Allerdings wird dadurch nicht verhindert, dass das Gewicht des stehenden Schaums auf das fließende Fluid beschleunigend einwirkt. Außerdem benötigt eine damit ausgerüstete Vorrichtung auch ein relativ großes Bauvolumen. Zudem kann auch ein großer Ausdehnungsraum mit Schaum ausgefüllt werden. Die Reinigung des Schaumausdehnungsraums kann weiterhin schwierig sein.

Aus den genannten Gründen sollte ein Ansammeln des Schaumanteils im Messbereich und ein Drücken von stehendem Schaum auf die flüssige Phase wenigstens während des Großteils der Hauptmelkphase zuverlässig verhindert werden, um ausreichend genaue Messergebnisse zu erhalten.

Es ist deshalb die Aufgabe der vorliegenden Erfindung, eine Vorrichtung zur Bestimmung des Massenstromes einer insbesondere schäumenden Flüssigkeit zur Verfügung zu stellen, welche mit einfachen Mitteln solche negativen Einflüsse wenigstens in der Hauptmelkphase verhindert.

Diese Aufgabe wird erfindungsgemäß durch die Vorrichtung zur Messung eines Massenstromes einer insbesondere schäumenden Flüssigkeit mit den Merkmalen des Anspruchs 1 gelöst. Vorteilhafte Weiterbildungen sind Gegenstand der Unteransprüche.

Die erfindungsgemäße Vorrichtung ist zum Messen des Massenstroms einer insbesondere schäumenden Flüssigkeit geeignet. Besonders geeignet ist die erfindungsgemäße Vorrichtung zum Messen des Massenstroms von Milch, insbesondere während des Melkvorgangs. Die Vorrichtung umfasst ein Gehäuse mit wenigstens einem Einlauf und wenigstens einem Auslauf. Wenigstens eine Messeinrichtung mit wenigstens einem Sensor ist zum Bestimmen des Massenstroms vorgesehen. Das Gehäuse ist dabei derart strukturiert, dass ein Vermischen des Schaumanteils mit dem Flüssiganteil des Fluids erzielbar ist. Dazu führt der Einlauf im Wesentlichen tangential in den Innenraum des Gehäuses hinein. Weiterhin ist dazu eine Achse eines Abschnitts des Gehäuses vor dem Sensor zur Vertikalen wenigstens um 30° geneigt und der Abschnitt des Gehäuses vor dem Sensor im Inneren wenigstens im wesentlichen rotationssymmetrisch gestaltet. Insbesondere ist der Abschnitt im Inneren im wesentlichen rotationssymmetrisch zu der Achse.

Die Erfindung eignet sich zur kontinuierlichen Messung und ist insbesondere zur Messung im Durchfluss vorgesehen.

Durch das Vermischen des Schaumanteils mit dem Flüssiganteil des Fluids wird ein starkes Ansammeln von Schaumphase in der Hauptmelkphase zuverlässig verhindert. Ein Untermischen des Schaums wird bewirkt, so dass im Wesentlichen kein stehender Schaum vorhanden ist, der auf den Flüssigkeitsspiegel drückt. Zum Untermischen des Schaums trägt im Inneren wenigstens im wesentlichen rotationssymmetrisch gestaltete Abschnitt des Gehäuses vor dem Sensor erheblich bei.

Diese Gestaltung zum Untermischen des Schaums hat ganz erhebliche Vorteile. Zum Einen wird durch die rotationssymmetrische oder doch im wesentlichen rotationssymmetrische Gestaltung des Innenraums nur der schon vorhandene Schaum eingemischt, aber kein neuer gebildet. Zum Anderen ist eine solche Gestaltung milchschonend, da die Bildung freier Fettsäuren nicht begünstigt wird. Wenn hingegen Milch auf z.B. eine Fläche aufprallt, kann das die Milchqualität negativ beeinflussen und außerdem noch Schaum erzeugen.

Ein weiterer erheblicher Vorteil der erfindungsgemäßen Vorrichtung ist auch die einfache und zuverlässige Reinigungsmöglichkeit, da die Reinigungsflüssigkeit über den Einlauf tangential eingebracht wird und die Innenoberfläche der Messvorrichtung zuverlässig benetzt. Weiterhin ist die erfindungsgemäße Vorrichtung einfach zu desinfizieren und zu warten, da keine bewegten Teile erforderlich sind. Der Aufbau des Messgehäuses kann sehr einfach und von geringen Abmessungen sein.

Ein zusätzlicher Vorteil ist, dass es mit der erfindungsgemäßen Vorrichtung möglich ist, beim Melken die stoßweise anfallende Milch im Durchfluss mit hoher Genauigkeit zu messen. Der pulsierende Milchstrom stellt hohe Anforderungen an den Aufbau der Vorrichtung, die hier in hohem Maße erfüllt werden.

Das Gehäuse ist derart strukturiert, dass eine schraubenförmige Strömung der Flüssigkeit erzielbar ist. Mit einer rotierenden und schraubenförmigen Bewegung des Fluids am Einlauf wird eine hervorragende Untermischung des Schaumanteils erzielt, indem mit dem im Einlaufbereich erzeugten Drall Schaum mitgerissen bzw. abtransportiert wird. Schon vorhandener oder neu entstehender Schaum wird in die flüssige Phase eingemischt. Auch die Reinigungswirkung ist hervorragend.

Damit hat diese Weiterbildung nicht die oben beschriebenen Nachteile aus dem Stand der Technik, da der Schaum abtransportiert wird. Die Vorrichtung erlaubt einen einfachen und zuverlässigen Betrieb.

Vorzugsweise ist das Gehäuse derart strukturiert, dass wenigstens im Bereich des Einlaufs das Gehäuse innen im Wesentlichen abgerundet gestaltet ist.

Vorteilhafterweise ist das Gehäuse derart strukturiert, dass wenigstens im Bereich des Einlaufs das Gehäuse gegenüber der Horizontalen geneigt ist. Unter geneigt ist im Sinne dieser Erfindung zu verstehen, dass ein Winkel zur Horizontalen und ein Winkel zur Vertikalen vorliegt. Vorzugsweise liegt der Winkel im Bereich von 45°. Durch die schräg stehende Anordnung werden Schaumanteile in die Flüssigkeit eingemischt.

Bei einer Vorrichtung zum Messen des Massenstroms eines schäumenden Fluids, insbesondere von Milch mit einem Gehäuse und einer darin angeordneten Messstrecke, ist wenigstens ein Einlauf und wenigstens ein Auslauf und eine Messeinrichtung zum Bestimmen des Massenstroms vorgesehen . Dabei führt der Einlauf im Wesentlichen tangential in den Innenraum des Gehäuses hinein und wenigstens im Bereich des Einlaufs ist das Gehäuse innen im Wesentlichen abgerundet gestaltet. Wenigstens im Bereich des Einlaufs ist das Gehäuse in dieser Ausgestaltung gegenüber der Horizontalen geneigt, so dass ein Vermischen des Schaumanteils mit dem Flüssiganteil der Flüssigkeit erzielbar ist.

Das Gehäuse umfasst wenigstens zwei Abschnitte , z.B. einen ersten und einen zweiten Abschnitt, wobei beide Abschnitte in einem Winkel zueinander angeordnet sind. Der Winkel kann bis zu etwa 90° betragen, vorzugsweise liegt er zwischen etwa 10° und 60°. Ein vorteilhafter Winkel liegt z.B. im Bereich von etwa 45°.

Vorzugsweise ist wenigstens der Bereich des Einlaufs zur Horizontalen geneigt angeordnet. Vorteilhafterweise beträgt ein Neigungswinkel im Bereich des Einlaufes zwischen 10° und 60°. In vorteilhaften Weiterbildungen kann der Neigungswinkel 45° betragen.

In bevorzugten Weiterbildungen ist ein mittlerer Abschnitt des Gehäuses zwischen Einlauf und Auslauf unter einem solchen Winkel zur Horizontalen angeordnet, dass eine Selbstentleerung stattfindet. Der Winkel kann z.B. 2° bis 45° betragen. Insbesondere liegt der Winkel zwischen 2° und 30° und vorzugsweise zwischen etwa 2° und etwa 15°.

Der erste und zweite Abschnitt des Gehäuses weist einen im Wesentlichen runden oder ovalen Querschnitt auf. Insbesondere der Abschnitt mit dem Einlauf weist vorzugsweise einen runden Querschnitt auf, um eine zuverlässige Untermischung des Schaumanteils zu gewährleisten. Vorzugsweise ist der Innenquerschnitt über einen wesentlichen Teil der Messstrecke oval oder abgerundet und insbesondere im Wesentlichen rund ausgebildet. Auch der Abschnitt mit dem Auslauf kann derart ausgebildet sein. Auch der Außenquerschnitt kann entsprechend ausgebildet sein. Insgesamt kann das Gehäuse aus einem oder mehreren rohrförmigen Abschnitten bestehen.

Der Einlauf kann einen Einlaufstutzen aufweisen. In bevorzugten Weiterbildungen kann der Einlauf schräg in das Gehäuse führen. Insbesondere kann der Einlauf schräg zur Längsachse des Gehäuses angeordnet werden und nicht senkrecht zur Strömungsrichtung, sondern unter einem Winkel im Bereich von 30° bis 90° zur Längsachse des Gehäuses im Bereich des Einlaufes. Insbesondere ist ein Winkel von z.B. 45°+/-15° möglich. Durch einen schräg angeordneten Einlaufstutzen wird bei gleichzeitiger Neigung des Gehäuses im Bereich des Einlaufes eine besonders effektive schraubenförmige Bewegung des Fluids erzielt, da die Einleitung unter einem Winkel zur Längsachse des Gehäuses erfolgt.

Bevorzugt ist dabei auch eine tangentiale Einleitung des Fluids in wenigstens einer Ebene. Besonders bevorzugt erfolgt eine Einleitung des Fluids, so dass die Strömung tangential zum Innenquerschnitt des Gehäuses erfolgt. Vorteilhaft ist eine Anordnung und Gestaltung des Einlasses derart, dass die zu untersuchende Flüssigkeit sich schraubenförmig entlang der Messstrecke bewegt.

In bevorzugten Weiterbildungen weist die Messeinrichtung wenigstens eine Einrichtung auf, welche einer Gruppe von Einrichtungen entnommen ist, welche eine optische Einrichtung, eine elektrische Einrichtung, eine akustische Einrichtung und/oder eine magnetische Einrichtung umfasst. Auch zwei oder mehr auch unterschiedliche Einrichtungen können vorgesehen sein.

Vorzugsweise umfasst wenigstens eine Messeinrichtung wenigstens eine elektrische Einrichtung, welche eine erste und wenigstens eine zweite Elektrode, ein elektrisches Mittel und eine Auswerteinrichtung umfasst.

Die erste Elektrode weist insbesondere eine ganz erhebliche räumliche Ausdehnung auf und ist insbesondere länglich ausgebildet. Die erste Elektrode weist insbesondere senkrecht zur Strömungsrichtung eine bedeutende Ausdehnung auf.

Die zweite Elektrode ist vorzugsweise ebenfalls räumlich ausgedehnt und insbesondere länglich ausgebildet, kann aber auch nur als punktuelle Elektrode oder Kontaktelektrode zum zu messenden Fluid ausgeführt sein.

Dabei sind die erste und die zweite Elektrode vorzugsweise in einem Bereich der Messstrecke angeordnet und erstrecken sich über wenigstens einen Teil der Höhe der Messtrecke.

Vorzugsweise ist an die erste Elektrode mittels des elektrischen Mittels eine elektrische Größe und vorzugsweise eine elektrische Spannung anlegbar. Das elektrische Mittel ist damit im Wesentlichen parallel zu der ersten Elektrode geschaltet. Das elektrische Mittel wird bzw. ist insbesondere mit zwei voneinander entfernten Punkten der ersten Elektrode verbunden, so dass es parallel zur ersten Elektrode geschaltet ist. Die zwei voneinander entfernten Punkte der ersten Elektrode können insbesondere an zwei Enden, insbesondere an den beiden Enden der ersten Elektrode angeordnet sein.

Vorzugsweise ist die zweite Elektrode über die Auswerteeinrichtung mit der ersten Elektrode elektrisch verbunden. Dabei ist die Auswerteeinrichtung vorzugsweise elektrisch zwischen der ersten und der zweiten Elektrode angeordnet. Insbesondere ist die Auswerteeinrichtung auf der einen Seite elektrisch mit der ersten Elektrode und auf der anderen Seite elektrisch mit der zweiten Elektrode verbunden.

Beim Messen wird die Höhe der fließenden Flüssigkeit mit der elektrischen Einrichtung nicht stufenförmig, sondern kontinuierlich erfasst. Damit ist eine hohe Messgenauigkeit erzielbar. Erfindungsgemäß wird nicht der Füllstand gemessen, sondern ein integrales Dichteprofil. Dabei ist prinzipbedingt eine kuhindividuelle Kalibrierung nicht nötig.

Der Massenstrom wird aus dem Dichteprofil abgeleitet. Dabei werden vorzugsweise Kalibrierungswerte verwendet, in denen die vorrichtungsspezifischen Einflüsse berücksichtigt werden. Z.B. kann darin berücksichtigt werden, welche Strömungsgeschwindigkeit sich bei welchem Dichteprofil ergibt.

Die elektrische Einrichtung arbeitet vorzugsweise mit einer Potentialmessung, indem eine potentiometrische Messung durchgeführt wird. An eine der Elektroden, z.B. an die erste Elektrode wird dazu ein Potential angelegt, welches über der Länge der Elektrode nahezu linear abfällt, wenigstens wenn Querschnitt und Materialeigenschaften über der Länge der Elektrode konstant sind.

Die erste Elektrode ist beim Messen bis zu einer gewissen Höhe mit der schäumenden Flüssigkeit benetzt. Die Benetzung erfolgt dabei sowohl mit der flüssigen Phase als auch mit der eventuell vorhandenen Schaumphase. In das Fluid wird deshalb ein Potentialverlauf eingebracht, der von der Höhe und der Art der Benetzung abhängt.

Die zweite Elektrode ist nun beabstandet zu der ersten Elektrode angeordnet. Die schäumende Flüssigkeit zwischen beiden Elektroden bildet insgesamt einen Widerstand. Die Höhe des Widerstandes wird integral durch das sich zwischen den Elektroden befindende Fluid gebildet. Je mehr Flüssigkeitsanteil vorhanden ist, desto kleiner ist der Widerstand und je mehr Schaumanteil im Volumen zwischen den beiden Elektroden vorhanden ist, desto größer ist der Widerstand. Der Widerstand hängt auch von dem horizontalen Abstand ab.

Vorzugsweise weist das Gehäuse bzw. die Messtrecke von dem Einlauf bzw. Einlaufstutzen bis zur Messebene eine im Vergleich zu einer Höhenabmessung der Messtrecke oder des Kanals relativ geringe Länge auf. Vorzugsweise ist die Länge des Gehäuses nicht größer als die fünffache Höhenabmessung, besonders bevorzugt liegt die Länge des Gehäuses zwischen der einfachen und der dreifachen Höhenabmessung. Eine derartige Ausgestaltung ist sehr vorteilhaft, da bei einer zu langen Messtrecke sich die Strömung zu sehr beruhigen kann und der positive Effekt des Dralls der Strömung wieder verloren gehen kann. Dann kann es passieren, dass sich ein Teil des Schaums oberhalb des zu messenden Fluids ansammelt und als stehender Schaum zu einer Verfälschung des Messergebnisses führt. Überraschenderweise hat sich hier gezeigt, dass ein relativ kurzes Gehäuse bzw. eine relativ kurze Messtrecke sehr positiv ist. Das führt auch zu einem wünschenswert kleinem Gehäuse.

Vorzugsweise ist wenigstens eine Strömungsverengung in dem Gehäuse vorgesehen ist. Vorzugsweise ist die Strömungsverengung an der Messstrecke angeordnet. Die Strömungsverengung ist insbesondere als Blende ausgeführt bzw. umfasst wenigstens eine Blende.

Die Blende im Sinne dieser Anmeldung ist ein Strömungswiderstand, der vorzugsweise durch eine Verengung des freien Strömungsquerschnittes der Messstrecke gebildet wird, wobei der freie Strömungsquerschnitt vorzugsweise als Kanal ausgebildet ist.

Die Strömungsverengung ist vorgesehen, um die strömende Flüssigkeit aufzustauen. Vorzugsweise ist die Messeinrichtung bzw. sind die Elektroden in der Nähe der Strömungsverengung vorgesehen.

Eine Blende ist auch schon aus einer Vorrichtung gemäß der DE 37 37 607 A1 bekannt. Im Unterschied zu einer solchen Vorrichtung kann die Blende bzw. der Ablaufschlitz erfindungsgemäß hier hingegen erheblich breiter gewählt werden, insbesondere wenn die Auflösung der Messung nicht von der Füllstandshöhe abhängt. Bei der bekannten Vorrichtung mit einer Vielzahl von übereinander angeordneten Elektroden ist die Auflösung stufenförmig, so dass erst ab einer Füllhöhe, die einem Vielfachen eines Stufenabstandes entspricht, eine hohe Messauflösung erzielbar ist. Vorzugsweise ist die Auflösung unabhängig von der Schlitzbreite, so dass ein breiterer Schlitz vorgesehen werden kann.

Dadurch wird auch das Problem einer Verstopfung des Ablaufschlitz erheblich verringert. Ein mit einem Verstopfen des Abflusses verbundenes Anstauen des Fluids vor dem Ablaufschlitz spiegelt einen höheren Durchfluss vor als tatsächlich vorliegt. Deshalb werden bei der bekannten Vorrichtung gemäß der DE 37 37 607 A1 Siebe im Bereich des Einlaufes vorgeschaltet, die eine regelmäßige Reinigung erfordern. Dadurch ist ein Dauereinsatz einer solchen Vorrichtung in fest eingebautem Zustand an einem Melkgerät erheblich erschwert, da der zusätzliche Wartungs- und Reinigungsaufwand groß ist.

Dieser Nachteil wird durch eine Weiterbildung der erfindungsgemäßen Vorrichtung vermieden, bei der die Messauflösung keine stufenmäßige Begrenzung hat. Mit einer stufenlosen Messwertaufnahme ist prinzipbedingt eine sehr hohe Genauigkeit möglich. Der Auslaufquerschnitt kann einen größeren Querschnitt aufweisen und der Ablaufschlitz breiter gestaltet werden als bei der aus dem Stand der Technik bekannten Vorrichtung. Ein erheblicher Vorteil daran ist, dass Fremdkörper oder Fremdpartikel, die sich in der Milch befinden können, abgeleitet werden und nicht den Strömungsweg verstopfen. Solche Fremdpartikel können z.B. Stroh, Einstreu oder Futtermittelreste in Form von z.B. Maiskörnern sein.

Futtermittelreste oder andere Fremdkörper wie Strohreste können z.B. bei Herunterfallen oder beim Abtreten eines Zitzenbechers von dem Boden aufgesaugt werden, bevor das Vakuum abgeschaltet wird. Auch bei unzureichender Reinigung der Zitze können Fremdkörper in die Milch gelangen, die den Ablaufschlitz verstopfen können, insbesondere wenn dieser so schmal ist, dass z.B. Maiskörner nicht hindurch können. Auf vorgeschaltete Filter kann bei der Vorrichtung gemäß der vorliegenden Erfindung verzichtet werden.

Vorteilhafterweise ist der Strömungswiderstand über z.B. den Strömungsquerschnitt der Strömungsverengung veränderbar. Besonders bevorzugt ist die Blende austauschbar oder veränderbar. Damit wird es ermöglicht die Größe des hydrodynamischen Widerstands einzustellen.

Das hat den Vorteil, dass auch bei Messung deutlich kleinerer maximaler Milchflüsse (z. B. bei euterviertelgetrenntem Melken oder bei Tieren mit geringen maximalen Milchflüssen wie z. B. Schafen oder Ziegen) eine ähnlich gute Messgenauigkeit und Messauflösung erzielt werden kann, da auch dann die komplette Messbereichshöhe genutzt wird. Wird der verfügbare Messbereich der Vorrichtung für eine jeweilige Messung optimal ausgenutzt, wird eine besonders hohe Genauigkeit bei der Messung erzielt.

In bevorzugten Weiterbildungen weist wenigstens eine Strömungsverengung einen über der Höhe variablen Querschnitt auf. Vorteilhafterweise nimmt der Querschnitt der Strömungsverengung oder der Blende mit der Höhe über dem Boden zu. Vorzugsweise nimmt der Querschnitt kontinuierlich mit der Höhe über dem Boden zu.

Vorzugsweise ist ein freier Abstand in dem engsten Bereich der Strömungsverengung größer als 2 mm, vorzugsweise größer als etwa 5 mm und besonders bevorzugt größer als der Durchmesser eines typischen Maiskorns. Ein kleinster freier Abstand von z.B. 7 mm bei einer Blende ist vorteilhaft, da die meisten Fremdkörper, die trotz aller Vorkehrungen in die Milch beim Melken geraten können, kleiner sind bzw. wenigstens eine kleinere Abmessung aufweisen.

Besonders bevorzugt ist, dass die Blende quer zur Strömungsrichtung geneigt angeordnet ist.

Besonders bevorzugt ist, dass die Blende in Strömungsrichtung ansteigend geneigt angeordnet ist. Wenn die Strömung in Richtung des Pfeils nach rechts "->" gerichtet ist, dann führt die Blende von links unten nach rechts oben "/" und umgekehrt ("\ <-"). Über die Blende werden dann Fremdkörper,. wie Maiskörner etc. weggespült.

In bevorzugten Weiterbildungen ist der Querschnitt der Strömungsverengung im Wesentlichen trapezförmig und/oder V- und/oder U-förmig gestaltet. Das bedeutet, dass die Blende in einem unteren Bereich einen freien Abstand von dl aufweist und oberhalb davon einen freien Abstand d2, wobei d2 größer als dl ist.

In Weiterbildungen kann die Strömungsverengung derart gestaltet sein, dass ein Querschnitt der Messstrecke sich in Strömungsrichtung verjüngt. Dabei ist ein erster Querschnitt in senkrechter Richtung zur Strömungsrichtung an einer ersten Stelle größer als ein nachgeordneter zweiter Strömungsquerschnitt. Vorzugsweise liegt ein sich in Strömungsrichtung verjüngender Strömungsquerschnitt vor, der z.B. konisch, kegelförmig, kegelstumpfförmig oder dergleichen vorgesehen sein kann.

Es ist bevorzugt, dass der Einlaufbereich an der Strömungsverengung in einer Aufsicht im Wesentlichen trapezförmig und/oder V- und/oder U-förmig gestaltet ist. Hier ist der Querschnitt in horizontaler Richtung und nicht in vertikaler Richtung gemeint, also ein Querschnitt parallel zum Boden der Messstrecke.

In einer Weiterbildung liegt eine sich nach unten verjüngende Form senkrecht zur Strömungsrichtung und eine sich in Strömungsrichtung verjüngende Form vor.

In bevorzugten Weiterbildungen der Erfindung ist in dem Gehäuse ein Kanal vorgesehen, der sich wenigstens teilweise im Bereich der Messstrecke erstreckt.

In einer bevorzugten Weiterbildung der Erfindung ist wenigstens eine Elektrode als eine Einrichtung ausgebildet, die in den Kanal hineinragt. Möglich ist es auch, eine Elektrode oder zwei oder mehr Elektroden in die Wände des Kanals zu integrieren. Hierdurch wird eine einfache Reinigung und Wartung sowie eine hohe Zuverlässigkeit der Messvorrichtung erzielt.

In bevorzugten Ausgestaltungen ist wenigstens eine Elektrode durch ein Gehäuseteil gebildet oder daran angeformt. Beispielsweise kann eine Elektrode oder es können beide Elektroden in der Wand oder auf der Wand des Kanals vorgesehen sein. Es kann auch wenigstens eine Elektrode an der Strömungsverengung oder an der Blende angeordnet sein.

Im Falle einer Blende als Strömungsverengung kann auf den gegenüberliegenden Seiten jeweils eine Elektrode vorgesehen sein. Dann ist es bevorzugt, dass die Schlitzbreite der Blende durch beide Elektroden vorgegeben oder wenigstens beeinflusst wird. Vorzugsweise sind beide Elektroden an der Blende vorgesehen.

Es ist von erheblichem Vorteil, wenn der Strömungswiderstand wenigstens teilweise durch die Elektroden gebildet wird. Dann bilden die Elektroden und die Blende eine integrale Komponente. Beispielsweise wird eine Elektrode in die Oberfläche des Strömungswiderstandes integriert. Durch diese Maßnahme wird eine weitere Vereinfachung des Aufbaus erzielt.

In allen Fällen ist es bevorzugt, dass wenigstens eine Elektrode stromaufwärts von der Blende bzw. von dem des Strömungswiderstand angeordnet ist.

Eine Elektrode kann zweckmäßigerweise in einem von der Blende angestauten Bereich, vorteilhafterweise möglichst in der Nähe des Strömungswiderstandes, platziert werden, um den Massenstrom möglichst genau zu bestimmen. Die zweite Elektrode kann etwas stromaufwärts von der Blende angeordnet werden, kann jedoch auch mit dem Strömungswiderstand gegenständlich verbunden sein.

In anderen Ausgestaltungen ist wenigstens im Bereich der Elektroden keine Querschnittsverengung vorgesehen. Der Messbereich, in dem die Elektroden angeordnet sind, ist dann vorzugsweise als z.B. mehreckiger Kanal ausgebildet. Insbesondere ist aber eine runde oder auch ovale Querschnittsform bevorzugt. Wenn dann die Elektroden in die Kanalwände integriert sind, wird der Massenstrom des strömenden Fluids bestimmt, ohne dass eine Querschnittsverengung vorhanden sein muss. Eine solche Gestaltung kann insbesondere bezüglich des Schaumabtransports Vorteile bieten.

In bevorzugten Weiterbildungen aller zuvor beschriebenen Ausgestaltungen kann eine Vertiefung in Form z.B. einer Senke im Bodenbereich der Messstrecke vorgesehen sein.

Vorzugsweise sind Aufbau und Strömungsführung derart, dass in der Senke die flüssige Phase des Fluids bzw. der zu messenden schäumenden Flüssigkeit auf natürliche Weise immer vorhanden ist. In der Senke kann dann eine fortlaufende Kalibrierung auf die flüssige Phase vorgenommen werden. Wenn dann oberhalb der Senke im Messbereich nur noch Schaumphase vorliegt, kann der von der Messeinrichtung gemessene Wert die momentanen Eigenschaften der flüssigen Phase berücksichtigen.

Durch die Senke wird sichergestellt, dass selbst bei geringsten Milchflüssen darin flüssige Phase vorliegt, um so ständig die aktuellen Eigenschaften reiner flüssiger Phase bestimmen zu können, um die Genauigkeit zu erhöhen. Dabei kann auf elektrische, chemische, optische oder akustische Eigenschaften kalibriert werden. Dadurch kann sichergestellt werden, dass reiner Schaum nicht als eine reine flüssige Phase betrachtet wird.

Die Tiefe der Senke oder Vertiefung ist viel kleiner ausgestaltet als die Höhe des Kanals. Das Verhältnis kann größer als 1:5 sein und ist insbesondere in einem Bereich zwischen etwa 1:10 und etwa 1:30 bei ungefähr 1:20.

Vorzugsweise weist die Senke in einer Weiterbildung einen Abfluss auf. Wenn der Abfluss bei der Messung fortwährend geöffnet ist, findet ein dauernder Austausch mit der Messflüssigkeit statt, so dass in der Senke fortwährend repräsentative Flüssigkeit vorhanden ist. Je nach Ausgestaltung der Senke und Eigenschaften der Messflüssigkeit könnte es ansonsten passieren, dass nur ein geringer Flüssigkeitsaustausch während des Messens erfolgt, wodurch Messfehler auftreten könnten.

Es ist aber auch eine Vertiefung ohne Abfluss möglich. Der Austausch erfolgt dann durch z.B. ein Mitreißen der Flüssigkeit in der Vertiefung.

Wenn ein Abfluss vorgesehen ist, so kann er verschließbar sein. Z.B. kann der Abfluss bei der Messung verschlossen bleiben, insbesondere wenn ein genügender Austausch der Flüssigkeit erfolgt. Zur Reinigung der Vorrichtung kann dann der Abfluss geöffnet werden, um eine einfachere Reinigung der Senke zu ermöglichen.

Der Abfluss kann beispielsweise durch eine kleine Ablaufrinne gebildet werden, welche die Senke mit dem Auslauf verbindet. Der Abfluss der Senke kann auch mit einem separaten Auslauf oder Anschluss verbunden sein.

Ein erheblicher Vorteil des Abflusses ist, dass sich die Vertiefung am Ende des Melkens selbst entleert, wodurch sicher gestellt wird, dass nach dem Spülen keine Restmengen von Spülwasser in die Milch der nachfolgenden Kuh gelangen.

Die Strömungsgeschwindigkeit zwischen Einlass und Auslass der Vorrichtung kann von der aktuellen Drucksituation abhängen. Denn wenn bei gleicher Dichteverteilung über der Höhe in einem ersten Fallbeispiel ein höherer Druckunterschied über der Messstrecke herrscht als in einem zweiten Fallbeispiel, so wird die Milch im ersten Fallbeispiel schneller strömen als im zweiten. Tritt z.B. bei einem Zitzengummi zusätzlich Luft ein, so wird die Strömung der Milch durch die eingelassene Luft beschleunigt. Außerdem kann auch ein lokaler Druckaufbau über der Messstrecke stattfinden, der die Strömungsgeschwindigkeit beschleunigt. Da in der Regel keine separate Geschwindigkeitsmessung erfolgt, sondern auf Kalibriermessungen zurückgegriffen wird, stimmt der anhand der Kalibrierkurve ermittelte Massenstrom nicht mehr mit dem aktuellen Massenstrom überein. Bei der Berechnung des Massenstroms wird ohne separate Geschwindigkeitsmessung nur die Geschwindigkeit aus der Kalibrierung verwendet werden, wodurch ein zu geringer Massenstrom berechnet und ein Messfehler entstehen würde.

Durch konstruktive Maßnahmen kann ein solcher Einfluss aber verringert oder vermieden werden. Zur Stabilisierung der Druckverhältnisse und um Auswirkungen von sich verändernden Druckverhältnissen auf die Strömungsgeschwindigkeit und somit die Messgenauigkeit zu vermeiden, ist es deshalb vorteilhaft, einen Druckausgleich über der Vorrichtung vorzusehen.

Mit einer Einrichtung zum passiven oder auch aktiven Druckausgleich über der Messvorrichtung wird erreicht, dass die Strömungsgeschwindigkeit wesentlich durch die Schwerkraft bedingt wird. Durch eine solche Einrichtung zum Druckausgleich wird erreicht, dass sich die Strömungsgeschwindigkeit im gesamten Messbereich im Wesentlichen entsprechend einer einfachen Kalibrierung verhält. über

Durch den Bypass wird ein strömungsbeschleunigender Effekt von Lufteinbrüchen am z.B. Melkzeug erheblich reduziert und die Messgenauigkeit in solchen Situationen erhöht.

In anderen Ausgestaltungen kann bei bekanntem Einfluss eines Druckunterschiedes auch die Messung des Druckunterschiedes über der Messstrecke ausreichen, um aus dem Höhenprofil der Dichte und dem Druckunterschied die Masse der aktuellen Strömung zu berechnen.

Vorzugsweise wird aber mit einem Druckausgleich in Form eines passiven Bypasses zwischen Einlass und Auslass der Druck über der Messstrecke stabilisiert. Der Bypass ist vorzugsweise so angeordnet und aufgebaut, dass im wesentlichen nur gasförmige Phase, also Luft, und nicht etwa Schaum oder flüssige Phase über den Bypass abgeleitet wird. Ein Bypass eignet sich insbesondere zur Vermeidung eines Staudrucks. Der Bypass ist besonders bevorzugt in der Nähe des Einlaufs bzw. Einlasses vorgesehen, insbesondere aber vor der Messeinrichtung bzw. den Elektroden.

Durch den Bypass bedingt, stellt die Vorrichtung zur Messung eines Massenstroms keinen wesentlichen Strömungswiderstand dar. Durch die zusätzliche Druckversorgung wird sichergestellt, dass am Zulauf annähernd der gleiche Druck herrscht, wie in der Melkleitung vor bzw. hinter der Vorrichtung zur Messung des Massenstroms. Es kommt so innerhalb der Vorrichtung nicht zu einem Druckgefälle, durch das die Strömungsgeschwindigkeit des Fluids beeinflusst wird.

Vorzugsweise umfasst der Bypass einen Bypassanschluss, um die Vorrichtung druckfrei zu halten. Der Bypassanschluss kann z.B. als Bypassstutzen ausgeführt sein. Vorzugsweise ist der Bypassstutzen in einem Bereich in der Nähe des Einlasses vorgesehen.

Vorzugsweise dient der Bypassanschluss weiterhin dazu, einen größeren Anteil der milchfreien Luftströmung direkt abzuführen. Durch die Abfuhr eines erheblichen Luftanteils wird die Schaumbildung innerhalb der Messtrecke reduziert. Weiterhin wird durch die abgeführte Luft ein negativer Einfluss auf die Strömungsgeschwindigkeit verhindert. Der Bypassanschluss kann dazu mit dem Einlass zusammen als Zyklonabscheider dienen und mit dem Auslass der Vorrichtung in strömungstechnischer Verbindung stehen.

In einer besonders bevorzugten Ausgestaltung weist die Messvorrichtung ein rohrförmiges Gehäuse auf, in welches die Milch tangential einströmt, so dass sich eine Querströmung zur Förderrichtung ausbildet. Das hat den Vorteil, dass zum einen die Milch sanft eingeleitet wird und es zu wenig Verwirbelungen kommt, zum anderen durch das Rotieren der Flüssigkeit Strömungsenergie abgebaut wird, um an der Messeinrichtung eine konstantere Strömungsgeschwindigkeit zu gewährleisten. Der Bypassstutzen sorgt für eine teilweise Milch-Lufttrennung, da die schwerere Milch durch den tangentialen Einlauf an die Wand des Gehäuses des Zyklonabscheiders gedrückt wird und ein Teil der leichteren Luft im Zentrum des Zyklonabscheiders verbleibt und über einen dort vorgesehenen Entlüftungsstutzen abgesaugt werden kann. Ein Zyklonabscheider, der mit einem Bypass versehen ist, gewährleistet insbesondere, dass am Zulauf annähernd der gleiche Druck herrscht wie in der Melkleitung und am Ablauf.

In einer bevorzugten Weiterbildung der Erfindung sind wenigstens drei Elektroden vorgesehen. Die drei Elektroden können zur Bestimmung des Neigungswinkels eingesetzt werden. Zur Ermittlung des Neigungswinkels wird die Vorrichtung insbesondere mit einem Fluid teilweise gefüllt und vorzugsweise verschlossen, so dass das Fluid nicht abfließen kann. Das Fluid kann Wasser oder eine sonstige geeignete Flüssigkeit sein. An die z.B. erste Elektrode wird eine elektrische Größe angelegt. Zwischen der ersten und der zweiten Elektrode wird ein erster Messwert abgegriffen und zwischen der ersten und der dritten Elektrode wird ein zweiter Messwert abgegriffen. Wenn nun die zweite und die dritte Elektrode in Strömungsrichtung beabstandet angeordnet sind, kann mit Hilfe des ersten und des zweiten Messwertes ein Neigungswinkel der Vorrichtung ermittelt werden.

Es kann auch eine dreidimensionale Neigung ermittelt werden, wenn z.B. insgesamt vier Elektroden geeignet angeordnet sind.

Nach erfolgter Ermittlung des Neigungswinkels bzw. der Neigungswinkel kann dieser Wert zur Korrektur der Kalibrierung verwendet werden. Es ist auch möglich, dass mittels des ermittelten Winkelwertes auf eine im Speicher der Vorrichtung abliegende geeignete Kalibrierungskurve zurückgegriffen wird. Insgesamt ist die Zuverlässigkeit und Genauigkeit dadurch noch weiter steigerbar.

In einer anderen Ausgestaltung werden zur Neigungsmessung nur die sowieso vorhandenen zwei Elektroden verwendet. Zur Neigungsmessung wird die Vorrichtung geleert und der Abfluss verschlossen und mit einer vordefinierten Menge Fluid gefüllt. Vor der Neigungsmessung wurden Messwerte bei verschiedenen Neigungswinkeln aufgenommen und eine Wertetabelle erstellt, die bei Neigungsmessungen als Kalibrierkurve verwendet werden können. Bei dieser Vorgehensweise kann mit den ohnehin vorhandenen Elektroden direkt ein Maß für den Neigungswinkel abgeleitet werden, da die Füllhöhe des Fluids an den Elektroden ein direktes Maß für den Neigungswinkel ist. Eine dritte Elektrode muss nicht vorhanden sein.

Der in den obigen Ausführungen beschriebene integrierte Neigungssensor unter Verwendung von zwei, drei oder mehr Elektroden hat erhebliche Vorteile. Der zusätzliche Aufwand ist gering, da nur eine weitere Elektrode nötig ist. Die Auswerteeinrichtung wird insgesamt nur einmal benötigt und kann zur Auswertung der Mengenmessung und zur Bestimmung der Neigung verwendet werden, so dass eine kostengünstige Realisierung möglich ist.

In bevorzugten Weiterbildung aller zuvor beschriebenen Weiterbildungen kann ein separater Neigungssensor vorgesehen sein. Dazu ist z.B. ein im Stand der Technik bekannter Neigungssensor geeignet. Das Signal bzw. die Signale des Neigungssensors werden verwendet, um eine geeignete Kalibrierungskurve aus einer Schar von Kalibrierungskurven auszuwählen, oder um einen festen oder flexiblen Korrekturwert und/oder Korrekturfaktor für die Messwerte auszuwählen.

Wenn ein separater Neigungssensor integriert ist, hat das den Vorteil, dass in festen oder unregelmäßigen Abständen die Ausrichtung der Vorrichtung überprüfbar ist. Die Überprüfung kann einmal pro Zeitabschnitt, wie z.B. einmal pro Jahr, Monat, Woche oder Tag, oder vorzugsweise wenigstens einmal pro Messvorgang durchgeführt werden. Die Feststellung der Lage kann auch während des Messens durchgeführt werden, indem bei Aufnahme jedes Messwertes oder jedes X-ten Messwertes die Signale des Neigungssensors berücksichtigt werden.

In einer besonders bevorzugten Weiterbildung ist eine Messkammer für den Neigungssensor vorgesehen, die an der Vorrichtung angeordnet ist. Der Neigungssensor kann nach dem oben beschriebenen Messprinzip arbeiten. In der Messkammer für den Neigungssensor sind dann drei und vorzugsweise wenigstens vier Elektroden angeordnet. Die Anordnung der Elektroden ist dabei so gewählt, dass wenigstens in Strömungsrichtung des zu messenden Fluids ein Neigungswinkel bestimmbar ist. Es ist möglich, dass für die Messeinrichtung zur Bestimmung der Menge oder des Massenstroms des Fluids und für den Neigungssensor insgesamt eine Auswerteeinrichtung vorgesehen ist.

In bevorzugten Weiterbildungen aller Ausgestaltungen ist zwischen einem ersten und einem zweiten Gehäuseabschnitt eine Trennwand vorgesehen, welche insbesondere einen erheblichen Teil der freien Querschnittsfläche verschließt. Vorzugsweise verschließt die Trennwand wenigstens 50 % der Fläche, insbesondere wenigstens 75 % der Fläche. Vorteilhafterweise verschließt die Trennwand den oberen Teil der Querschnittsfläche, so dass das Fluid unter der Trennwand hindurchfließen muss. Das begünstigt das Untermischen des Schaums.

Weitere Vorteile, Merkmale und Ausgestaltungen der Erfindung werden nun in den folgenden Ausführungsbeispielen mit Bezug auf die Figuren erläutert. Darin zeigen schematisch:
- Fig. 1: eine erfindungsgemäße Vorrichtung zur Messung eines Massenstromes in perspektivischer dreidimensionaler Ansicht mit eingesetzter Blende;
- Fig. 2: die Vorrichtung nach Fig. 1 mit herausgezogener Blende;
- Fig. 3: eine erfindungsgemäße Vorrichtung nach Fig. 1 im Längsschnitt;
- Fig. 4A: eine erfindungsgemäße Vorrichtung nach Fig. 1 im Querschnitt im Bereich der Messeinrichtung;
- Fig. 4B: eine zweite Ausgestaltung einer erfindungsgemäßen Vorrichtung im Querschnitt im Bereich der Messeinrichtung;
- Fig. 5: ein als Blende ausgestalteter Strömungswiderstand für größere Massenströme;
- Fig. 6: ein als Blende ausgestalteter Strömungswiderstand für kleinere Massenströme;
- Fig. 7: einen Längsschnitt durch ein weiteres Ausführungsbeispiel einer erfindungsgemäßen Vorrichtung; und
- Fig. 8: ein elektrisches Ersatzschaltbild für eine erfindungsgemäßen Vorrichtung.

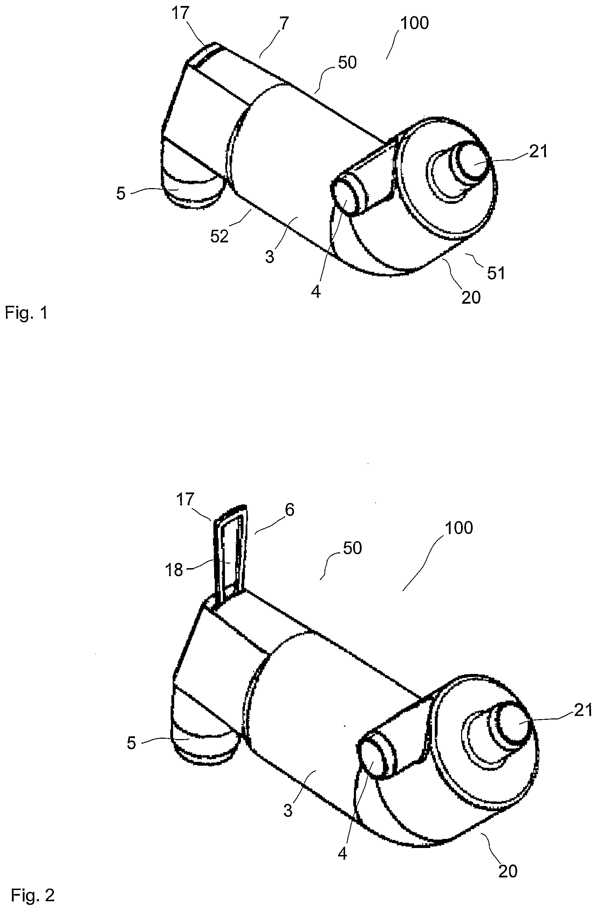

Figuren 1 und 2 zeigen ein erstes Ausführungsbeispiel einer erfindungsgemäßen Vorrichtung 100 in einer perspektivischen Ansicht zur Messung eines Massenstromes eines Fluids 1, insbesondere einer Schaum enthaltenden Flüssigkeit bzw. einer schäumenden Flüssigkeit wie beispielsweise Milch. In der Nähe des Einlaufs 4 des Gehäuses 50 ist ein Druckausgleichsstutzen 21 zur Entlüftung vorgesehen. Der Einlauf 4 führt tangential in das Gehäuse 50, so dass die Flüssigkeit rotierend in das Gehäuse einläuft. Weiter ist ein Kanal 3 vorgesehen, der sich an den Einlauf/ Zulauf 4 anschließt.

Ein Messsystem 7 ist in diesem Ausführungsbeispiel im Kanal 3 vor einer Blende 17 angeordnet, wobei die Blende 17 hier stromaufwärts vor einem Abfluss 5 angeordnet ist. Die Blende 17 dient als Strömungswiderstand 6 (siehe Fig. 2). In bevorzugten Ausgestaltungen kann die Blende je nach Bedarf eingesetzt (siehe Fig. 1) oder ausgewechselt (siehe Fig. 2) werden. Durch Auswechseln der Blende 17 kann der Strömungswiderstand an unterschiedliche Gegebenheiten angepasst werden, da z.B. beim Melken von Schafen oder Ziegen der maximale Milchfluss erheblich geringer als beim Melken von Kühen ist.

Die Blende 17 weist einen trapezförmigen Öffnungsquerschnitt 18 auf, der mit zunehmender Höhe zunimmt. Mit der Blende 17 wird die Größe des hydrodynamischen Widerstands des Strömungswiderstands 6 vorgegeben. Zur Veränderung des Strömungswiderstandes kann beispielsweise der freie Öffnungsquerschnitt sowie seine Konizität verändert werden. Über die Entlüftungsvorrichtung bzw. den Bypassstutzen 21 wird die Messvorrichtung insgesamt im Wesentlichen druckfrei gehalten, indem ein Teil der Luft abgeführt wird, welche in dem Fluid, dessen Massenstrom bestimmt werden soll, enthalten ist.

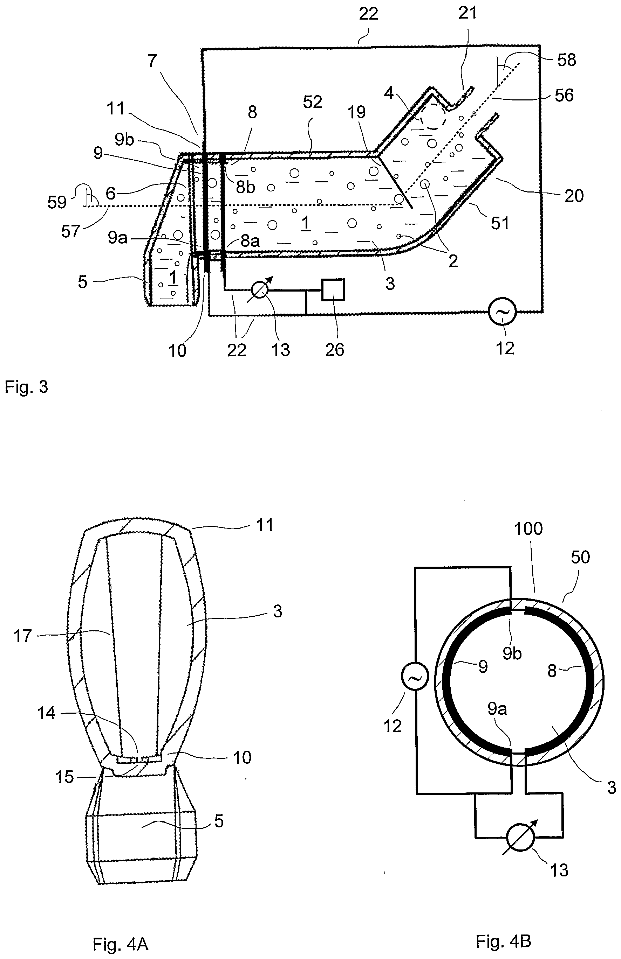

Fig. 3 zeigt eine erfmdungsgemäße Vorrichtung 100 zur Messung eines Massenstromes im Längsschnitt mit dem Kanal 3, der einen Zulauf 4 (siehe Fig. 1) und einen Ablauf 5 aufweist und von einem Fluid 1, das einen Schaumanteil 2 aufweist, durchflossen wird. Der Zulauf 4 ist in einen Zyklonabscheider 20 integriert, durch den Gas oder Luft über den Bypassstutzen 21 bzw. die Entlüftungsvorrichtung 21 teilweise entfernt werden kann.

In das Gehäuse 50 fließt das Fluid im Bereich des Einlaufes tangential ein. Der Fluidstrom legt sich an das dort rund ausgebildete Gehäuseteil 51 an, das als Zyklonabscheider 20 dient. Die schwerere flüssige Phase wird nach außen gedrückt, während wenigstens ein Teil der gasförmigen Phase 2 sich in einem zentralen Bereich sammelt und über den Bypassstutzen 21 abgeführt wird. Der Bypassstutzen ist zentrisch am Ende des dort zylindrisch ausgebildeten Gehäuseteiles 51 vorgesehen und verbindet das erste Ende des Gehäuses 50, an dem der Zulauf 4 vorgesehen ist, über eine Bypassleitung mit dem zweiten Ende des Gehäuses 50, an dem der Auslauf 5 vorgesehen ist, um ein Druckgleichgewicht zwischen Zulauf 4 und Ablauf 5 herzustellen. Dadurch wird die Messvorrichtung 100 an sich druckfrei gehalten, so dass die sich einstellende Strömungsgeschwindigkeit des Fluids im Wesentlichen nicht aufgrund von Druckunterschieden bedingt wird. Erhöhte Druckunterschiede könnten ansonsten durch z.B. einen Lufteinbruch am Zitzengummi hervorgerufen werden. Insgesamt wird durch einen Bypass die Reproduzierbarkeit erhöht.

Das Gehäuse 50 umfasst einen ersten Teil 51 und einen zweiten Teil 52. Der erste Teil des Gehäuses 51 ist im Bereich des Zulaufes 4 gegenüber der Horizontalen geneigt. Hier im Ausführungsbeispiel beträgt der Winkel etwa 45° zur Horizontalen. Das zweite Gehäuseteil 52 ist ebenfalls gegenüber der Horizontalen geneigt, um die Fließbewegung zu unterstützen. Der Neigungswinkel ist aber geringer und hängt von den konkreten Bedingungen ab. In der Regel liegt der Winkel unter 30°, vorzugsweise unter 15°. Gute Ergebnisse sind mit einem Neigungswinkel von 5° erzielt worden.

Eine zentrale Achse 56 (gestrichelt eingezeichnet) durch das erste Gehäuseteil 51 bzw. den ersten Abschnitt des Gehäuses 50 ist gegenüber der vertikalen Ausrichtung um einen Winkel 58 geneigt, der hier im Ausführungsbeispiel etwa 45° beträgt. Eine zentrale Achse 58 (gestrichelt eingezeichnet) durch das zweite Gehäuseteil 52 bzw. den zweiten Abschnitt des Gehäuses 50 ist gegenüber der vertikalen Ausrichtung um einen Winkel 59 geneigt. Beide Gehäuseteile sind hier nahezu rotationssymmetrisch zu den jeweiligen zentralen Achsen 56 bzw. 57 ausgebildet. Insbesondere durch den runden Querschnitt des zweiten Abschnitts 52 vor dem Sensor mit der ersten und der zweiten Elektrode, wird in dem wichtigen Messbereich ein Untermischen von Schaum in das strömende Fluid erreicht, so dass vorhandener Schaum oder entstehender Schaum abtransportiert wird und sich nicht ansammelt.

Insbesondere durch die Neigung des ersten Gehäuseteils 51 wird eine schraubenförmige Strömung des Fluids im Gehäuse 50 verursacht. Das einströmende Fluid wird radial eingeleitet und erhält durch die Schwerkraft bedingt noch eine zusätzliche axiale Komponente.

Ein Wehr bzw. eine Trennwand 19 ist hier im Ausführungsbeispiel im Gehäuse 50 vorgesehen, welches hier zwischen erstem Gehäuseteil 51 und zweitem Gehäuseteil 52 vorgesehen ist und sich von der Decke aus schräg nach hinten und unten erstreckt. Die Trennwand 19 verschließt die Vorrichtung im oberen Bereich, so dass nur unterhalb Fluid von dem ersten Gehäuseteil 51 zu dem zweitem Gehäuseteil 52 fließen kann. Die Trennwand 19 dient zum zusätzlichen Abbau der Strömungsgeschwindigkeit und zum besseren Einmischen des Schaums, da der auf der Flüssigkeit liegende Schaum nur eingemischt durch den freien Querschnitt unterhalb des Wehrs gelangen kann, da der freie Querschnitt meistens unterhalb des Flüssigkeitsspiegels liegt. In anderen Ausgestaltungen kann keine Trennwand 19 vorgesehen sein.

Insgesamt setzt sich die schraubenförmige Bewegung des Fluids im gesamten Gehäuse 50 fort, so dass auch im zweiten im wesentlichen ebenfalls zylindrisch ausgebildeten Gehäuseteil 52 eine schraubenförmige Bewegung des Fluids vorliegt, wenigstens bei starken Fluidströmen.

Ein ganz erheblicher Vorteil dieser Struktur ist, dass der Schaumanteil des Fluids mitgerissen und untergemischt wird. Bei herkömmlichen Gehäuseformen und Strömungsbedingungen setzt sich der Schaum oft oberhalb des fließenden flüssigen Anteils des Fluids als stehender Schaumanteil ab und sammelt sich dort an. Mit der vorliegenden Ausgestaltung wird das weitgehend vermieden. Der Schaumanteil wird wenigstens während der Hauptmelkphase bei den dort vorliegenden Milchflüssen zuverlässig abgeführt. Auch während des Melkbeginns und des Melkendes wird der Schaumanteil in der Regel zuverlässig abgeführt. Da das eingesetzte Messprinzip den Schaumanteil prinzipbedingt mit berücksichtigt, wird insgesamt eine hervorragende Messgenauigkeit erzielt.

Das Fluid 1 wird vor dem Abfluss 5 in dem zweiten Gehäuseteil 52 durch einen Strömungswiderstand 6 angestaut, der hier in der Form einer Blende vorgesehen ist, und ergießt sich in den Ablauf 5.

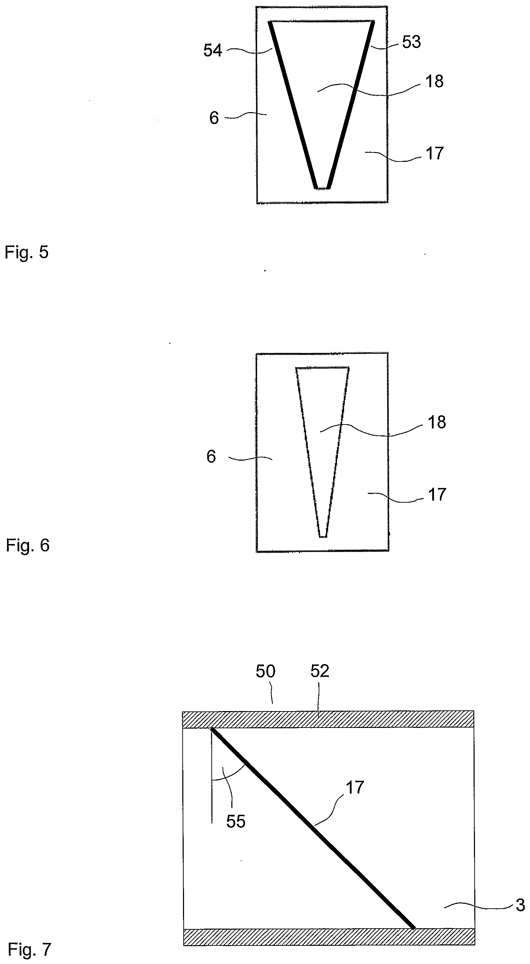

Die Messeinrichtung 7 wird durch die beiden Elektroden 8, 9 sowie das Spannungsmessmittel 13 und die Spannungsquelle 12 bzw. das Spannungserzeugungsmittel gebildet. Die Elektroden der Messeinrichtung 7 können in der Nähe des Strömungswiderstands 6 platziert werden. Insbesondere kann die Blende durch die Elektroden gebildet werden, wie in Fig. 5 dargestellt, so dass eine erste seitliche Begrenzung 53 der Blende als erste Elektrode 9 und die zweite seitliche Begrenzung 54 als zweite Elektrode 8 dienen kann.

Die erste Elektrode 9 ist in Fig. 3 als runder Stab aus leitendem Material (z. B. Edelstahl) ausgebildet, kann jedoch auch in eine Wandung des Kanals 3 integriert werden, wie es in Fig. 4B dargestellt ist.

Mit dem Spannungserzeugungsmittel 12 wird eine alternierende Spannung oder eine Wechselspannung vorgegeben, um elektrolytische Ablagerungen an den Elektroden 8, 9 zu vermeiden, die zu einer Beeinträchtigung der Spannungsmessung führen würden. Dabei werden übliche Frequenzen verwendet.

Die Dichte des durchströmenden Fluids 1 wird mit Hilfe einer ersten Elektrode 9 und einer zweiten Elektrode 8 bestimmt, in dem zwischen entfernten Punkten 9a und 9b der ersten Elektrode 9 mit Hilfe elektrischer Leitungen 22 und einem Spannungserzeugungsmittel 12 eine Spannung an die erste Elektrode 9 angelegt wird. Die Spannung kann insbesondere, wie hier im Ausführungsbeispiel dargestellt, zwischen dem ersten Ende 10 und einem zweiten Ende 11 der ersten Elektrode 9 angelegt werden. Das erste Ende 10 und der erste Punkt 9a der ersten Elektrode 9 sind hier im unteren Bereich des Gehäuses vorgesehen, während der zweite Punkt 9b und das zweite Ende 11 im oberen Bereich des Gehäuses angeordnet sind.

Der Widerstand der Elektrode 9 ist so gewählt, dass er erheblich kleiner ist als der des zu messenden Fluids bei maximaler Füllhöhe. Dadurch kann der Einfluss des Fluidwiderstandes auf den Gesamtwiderstand in erster Näherung vernachlässigt werden. Eine rechnerische Berücksichtigung des Einflusses ist aber auch möglich.

Das angelegte Potential hängt vom Einzelfall ab. Hier im Ausführungsbeispiel beträgt der Spitzenwert der alternierenden Spannung 60 mV, während der Widerstand der Elektrode 9 etwa 100 Milliohm beträgt.

Das Potential nimmt in der ersten Elektrode linear mit der Höhe zu. An jeder mit Fluid benetzten Stelle wird das jeweils anliegende Potential in das Fluid eingebracht. Durch die geringe absolute Höhe des Potentials werden negative Auswirkungen auf die zu melkenden Tiere vermieden.

Die zweite Elektrode 8 erstreckt sich von einem ersten Punkt 8a bzw. von einem ersten Ende im unteren Bereich des Gehäuses bis zu einem zweitem Punkt 8b bzw. einem zweiten Ende im oberen Bereich des Gehäuses und nimmt ein Potential an, welches von dem Füllstand des Fluids 1 und der Zusammensetzung des Fluids abhängt. Mit dem Spannungsmessmittel 13 ist der Punkt 8a der zweiten Elektrode 8 und der Punkt 9a der ersten Elektrode 9 bzw. das untere Ende 10 der ersten Elektrode 9 verbunden. Liegt nur reine flüssige Phase vor, dann wird an der zweiten Elektrode 8 entsprechend der Höhe des fließenden Fluids ein entsprechendes Potential angelegt, das mit dem Spannungsmessmittel 13 gemessen wird. Der Schaumanteil 2 wird berücksichtigt, da der spezifische Widerstand des Schaums entsprechend größer als der der flüssigen Phase ist. Die Widerstandsanteile von flüssiger Phase und Schaumphase bilden insgesamt einen Gesamtwiderstand, der repräsentativ für die Dichte ist.

Fig. 3 zeigt einen Querschnitt durch eine erfindungsgemäße Vorrichtung 100 mit einer als runden Stab ausgebildeten ersten Elektrode 9 und einer ebenso als runden Stab ausgebildeten zweiten Elektrode 8. Die beiden Elektroden 8 und 9 ragen in eine Vertiefung 14 hinein, in der sich auch bei geringsten Massenströmen Fluid sammelt, so dass eine elektrische Verbindung zwischen der ersten Elektrode 9 und der zweiten Elektrode 8 über die flüssige Phase hergestellt wird. Eine elektrische Kontaktierung über die flüssige Phase ist bei Melkbeginn und insbesondere gegen Melkende bei geringen oder geringsten Milchflüssen wichtig. Wenn keine flüssige Phase mehr vorhanden ist und nur noch Schaum vorhanden ist, könnten ansonsten Fehlmessungen auftreten.

Durch eine mit flüssiger Phase gefüllte Senke wird sichergestellt, dass auch bei Massenströmen, die nahezu nur eine reine Schaumphase umfassen, ein richtiges Messergebnis erzielt wird.

Es ist in einfacheren Ausführungsformen auch möglich, dass anstatt einer Senke ein kleiner Widerstand parallel geschaltet wird, der eine "Senke" simuliert. Auch damit kann ein zufriedenstellendes Ergebnis erzielt werden, allerdings kann bei kleinen Flüssen mit nahezu reinem Schaumanteil noch ein Einfluss des Leitwerts der Flüssigkeit auf das Messergebnis vorliegen.

Durch diese Maßnahme ist eine Messung des Potentials selbst bei geringsten Massenströmen möglicht. Die Vertiefung 14 weist einen Abfluss 15 auf, durch welchen Fluid 1 ständig abfließen kann, so dass das in der Vertiefung 14 befindliche Fluid 1 kontinuierlich ausgetauscht wird.

Etwaige zeitliche Schwankungen der Leitfähigkeit des Fluids 1 werden somit auch in der Vertiefung 14 registriert und führen somit nicht zu Ungenauigkeiten bei der Messung. Durch die Vertiefung 14 wird ein gewisses minimales Flüssigkeitsniveau gebildet, so dass bei der potentiometrischen Messung nicht der Füllstand des Schaums, sondern die durchschnittliche Dichte des Fluids 1 bestimmt wird.

Fig. 5 und 6 zeigen unterschiedliche Ausgestaltungen des Strömungswiderstandes 6 als Blende 17 mit unterschiedlichen sich konisch verjüngenden bzw. trapezförmigen Öffnungsquerschnitten 18. Die Öffnungsquerschnitte 18 können auf die jeweilige Messung angepasst werden mit dem Vorteil, dass auch bei kleinen Massenströmen Änderungen des Flüssigkeitsstandes gut messbar sind.

In einer speziellen Ausgestaltung der Vorrichtung ist eine Blende 17 vorgesehen, wie sie z.B. in Fig. 5 dargestellt ist. Dabei können die beiden Elektroden 8, 9 die Begrenzungen der Blende 17 darstellen, indem der eine Rand 53 die erste Elektrode 9 und der zweite Rand 54 die zweite Elektrode 8 bildet. Eine solche Ausgestaltung wurde zunächst als ungünstig angesehen, da eine ungleichmäßige Einbringung des Potentials mit der ersten Elektrode 9 und ein ungleichmäßiger Abgriff des Potentials mit der zweiten Elektrode 8 erwartet wurde, da der Abstand der Elektroden über der Höhe stark variiert. Überraschenderweise hat sich dennoch herausgestellt, dass diese Ausgestaltung zu hochqualitativen Messergebnissen führt, obwohl die beiden Elektroden nicht parallel zueinander angeordnet sind. Die V-Form bzw. die trapezförmige Gestalt der Elektroden behindert die Messung nicht. Im Gegenteil wird bei dieser Ausgestaltung eine besonders zuverlässige Messung erzielt. Das liegt unter anderem daran, dass die gesamte strömende Fluidmenge durch die Blende fließt und zwischen den beiden Elektroden die Dichte bestimmt wird.

In Fig. 7 ist eine modifizierte Ausführungsform des Strömungswiderstandes in einer Seitenansicht dargestellt. In dieser Ausgestaltung ist der Strömungswiderstand zur Senkrechten geneigt angeordnet. Der Winkel zur Senkrechten beträgt hier etwa 45°, kann aber auch zwischen 0° und 60° liegen oder noch größer sein.

Bei dieser Ausführungsform können die Ränder der Blende 17 auch wieder durch eine oder beide Elektroden gebildet werden. Die Blende 17 hat wiederum einen Trapezquerschnitt 18, wie er in den Fig. 5 und 6 abgebildet ist. Die Blende ist in Richtung der Strömung geneigt. Dadurch werden Fremdpartikel in dem strömenden Fluid, die sich sonst in einem unteren Bereich der Blende festsetzen könnten, entlang der Blende hochgespült bis der Querschnitt der Blende ausreicht, um die Fremdpartikel mitzureißen und wegzuspülen. Ein Verstopfen der Blende tritt deshalb in der Regel nicht auf.

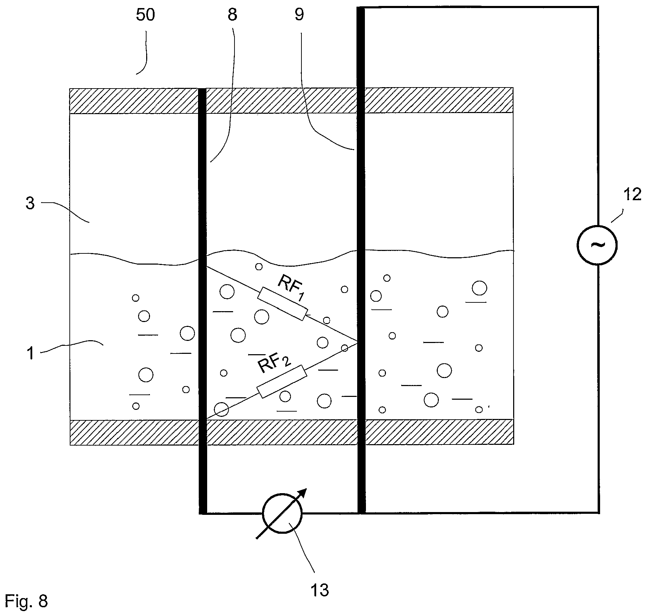

In Figur 8 ist in einem Querschnitt ein Ersatzschaubild des Messprinzips eingezeichnet. Die erste Elektrode 9 besteht aus einem niederohmigen Edelstahlstab, welcher in das leitfähige Flüssigkeits-Gasgemisch eintaucht. Das Spannungserzeugungsmittel 12 treibt über die Zuleitungen 22 einen höherfrequenten Strom durch die erste Elektrode 9. Zwischen der ersten Elektrode 9 und der zweiten Elektrode 8 wird mit dem Spannungsmessmittel 13 eine Spannung gemessen.

Zum eingetauchten Teil der ersten Elektrode 9 liegen die mittleren Ersatzwiderstände RF1 und RF2 des Flüssigkeits-Gasgemisches parallel. Somit ist die abgenommene Spannung proportional zum Dichteverlauf an der ersten Elektrode 9. Durch gesteuerte Stromspeisung wird der direkte Einfluss von den mittleren Ersatzwiderständen RF1 und RF2 auf das Messergebnis minimiert.

### Bezugszeichenliste:

- 1: Fluid
- 2: Schaum
- 3: Kanal
- 4: Zulauf
- 5: Ablauf
- 6: Strömungswiderstand
- 7: Messeinrichtung
- 8: zweite Elektrode
- 8a: erster Punkt
- 8b: zweiter Punkt
- 9: erste Elektrode
- 9a: erster Punkt
- 9b: zweiter Punkt
- 10: erstes Ende
- 11: zweites Ende
- 12: Spannungserzeugungsmittel
- 13: Spannungsmessmittel
- 14: Vertiefung
- 15: Abfluss
- 17: Blende
- 18: Öffnungsquerschnitt
- 19: Trennwand
- 20: Zyklonabscheider
- 21: Entlüftungsvorrichtung
- 22: elektrische Leitungen
- 26: Auswerteeinrichtung
- 50: Gehäuse
- 51: erstes Gehäuseteil
- 52: zweites Gehäuseteil
- 53: seitliche Begrenzung der Blende
- 54: seitliche Begrenzung der Blende
- 55: Winkel
- 56: Achse
- 57: Achse
- 58: Winkel
- 59: Winkel
- 100: Vorrichtung

## Patentansprüche

1. Vorrichtung (100) zum Messen des Massenstroms eines schäumenden Fluides (1), insbesondere von Milch während des Melkvorgangs, mit
einem Gehäuse (50) mit wenigstens einem Einlauf (4) und wenigstens einem Auslauf (5), und wenigstens einer Messeinrichtung (7) mit wenigstens einem Sensor zum Bestimmen des Massenstroms,
**dadurch gekennzeichnet,**
**dass** das Gehäuse (50) derart strukturiert ist, dass eine schraubenförmige Strömung der Flüssigkeit erzielbar ist, um ein Vermischen des Schaumanteils mit dem Flüssiganteil des Fluids zu erzielen,
indem das Gehäuse (50) wenigstens einen ersten Gehäuseabschnitt (51) mit einem ovalen oder runden Querschnitt und einen zweiten Gehäuseabschnitt (52) mit einem runden oder ovalen Querschnitt umfasst, wobei eine zentrale Achse (56) des ersten Gehäuseabschnitts (51) und eine zentrale Achse (57) des zweiten Gehäuseabschnitts (52) unter einem Winkel zueinander angeordnet sind, wobei der Winkel bis zu 90° und vorzugsweise zwischen 10° und 60° beträgt, und wobei der Einlauf im wesentlichen tangential in den ersten Gehäuseabschnitt (51) hineinführt, und wobei der Sensor im zweiten Gehäuseabschnitt (52) angeordnet ist, und der zweite Gehäuseabschnitt (52) des Gehäuses (50) vor dem Sensor im Inneren rotationssymmetrisch gestaltet ist.

2. Vorrichtung nach Anspruch 1, **dadurch gekennzeichnet, dass** das Gehäuse derart strukturiert ist, dass wenigstens im Bereich des Einlaufs das Gehäuse innen im wesentlichen abgerundet gestaltet ist.

3. Vorrichtung nach Anspruch 1 oder 2, **dadurch gekennzeichnet, dass** das Gehäuse derart strukturiert ist, dass wenigstens im Bereich des Einlaufs das Gehäuse gegenüber der Horizontalen geneigt ist.

4. Vorrichtung nach mindestens einem der vorhergehenden Ansprüche, **dadurch gekennzeichnet, dass** ein Neigungswinkel im Bereich des Einlaufes zwischen 10° und 60° beträgt.

5. Vorrichtung nach mindestens einem der vorhergehenden Ansprüche, **dadurch gekennzeichnet, dass** ein mittlerer Abschnitt des Gehäuses zwischen Einlauf und Auslauf unter einem solchen Winkel zur Horizontalen angeordnet ist, dass eine Selbstentleerung stattfindet.

6. Vorrichtung nach mindestens einem der vorhergehenden Ansprüche, **dadurch gekennzeichnet, dass** der Einlauf schräg in das Gehäuse führt.

7. Vorrichtung nach mindestens einem der vorhergehenden Ansprüche, **dadurch gekennzeichnet, dass** die Messeinrichtung wenigstens eine Einrichtung aufweist, welche einer Gruppe von Einrichtungen entnommen ist, welche eine optische Einrichtung, eine elektrische Einrichtung, eine akustische Einrichtung und eine magnetische Einrichtung umfasst.

8. Vorrichtung nach dem vorhergehenden Anspruch, **dadurch gekennzeichnet, dass** wenigstens eine Messeinrichtung wenigstens eine elektrische Einrichtung umfasst, welche eine erste und wenigstens eine zweite Elektrode, ein elektrisches Mittel und eine Auswerteinrichtung umfasst.

9. Vorrichtung nach dem vorhergehenden Anspruch, **dadurch gekennzeichnet, dass** die erste und die zweite Elektrode in einem Bereich einer Messstrecke angeordnet sind und sich über wenigstens einen Teil der Höhe der Messtrecke erstrecken.

10. Vorrichtung nach Anspruch 8 oder 9, **dadurch gekennzeichnet, dass** mittels des elektrischen Mittels eine elektrische Größe an die erste Elektrode anlegbar ist.

11. Vorrichtung nach einem der vorhergehenden Ansprüche, **dadurch gekennzeichnet, dass** wenigstens eine Strömungsverengung in dem Gehäuse vorgesehen ist.

12. Vorrichtung nach dem vorhergehenden Anspruch, **dadurch gekennzeichnet, dass** wenigstens eine Strömungsverengung wenigstens eine Blende ist.

13. Vorrichtung nach Anspruch 11 oder 12, **dadurch gekennzeichnet dass** wenigstens eine Strömungsverengung einen über der Höhe variablen Querschnitt aufweist.

14. Vorrichtung nach Anspruch 13, **dadurch gekennzeichnet,**
**dass** der Querschnitt mit der Höhe über dem Boden zunimmt.

15. Vorrichtung nach mindestens einem der Ansprüche 11 bis 14, **dadurch gekennzeichnet, dass** ein freier Abstand in dem engsten Bereich der Strömungsverengung größer ist als 2 mm, vorzugsweise größer etwa 5 mm und besonders bevorzugt größer als der Durchmesser eines typischen Maiskorns.

16. Vorrichtung nach mindestens einem der Ansprüche 12 bis 15, **dadurch gekennzeichnet, dass** die Blende zur Strömungsrichtung geneigt angeordnet ist.

17. Vorrichtung nach dem vorhergehenden Anspruch, **dadurch gekennzeichnet, dass** die Blende in Strömungsrichtung ansteigend geneigt angeordnet ist.

18. Vorrichtung nach mindestens einem der Ansprüche 11 bis 17, **dadurch gekennzeichnet, dass** der Querschnitt der Strömungsverengung im Wesentlichen trapezförmig und/oder V- und/oder U-förmig gestaltet ist.

19. Vorrichtung nach mindestens einem der Ansprüche 12 bis 18, **dadurch gekennzeichnet, dass** ein Einlaufbereich an der Strömungsverengung in einer Aufsicht im Wesentlichen trapezförmig und/oder V- und/oder U-förmig gestaltet ist.

20. Vorrichtung nach mindestens einem der vorhergehenden Ansprüche, **dadurch gekennzeichnet, dass** ein Querschnitt der Messstrecke sich in Strömungsrichtung verjüngt.

21. Vorrichtung nach einem der vorhergehenden Ansprüche, **dadurch gekennzeichnet, dass** ein Bypass zwischen Einlass und Auslass vorgesehen ist, um einen Druck über der Messstrecke zu stabilisieren.

22. Vorrichtung nach einem der vorhergehenden Ansprüche, **dadurch gekennzeichnet, dass** wenigstens eine dritte Elektrode vorgesehen ist.

23. Vorrichtung nach dem vorhergehenden Anspruch, **dadurch gekennzeichnet, dass** die dritte Elektrode von oben in die Messstrecke hineinragt.

24. Vorrichtung nach einem der vorhergehenden Ansprüche, **dadurch gekennzeichnet, dass** wenigstens ein Neigungssensor zur Bestimmung wenigstens eines Neigungswinkels vorgesehen ist.

25. Vorrichtung nach einem der vorhergehenden Ansprüche, **dadurch gekennzeichnet, dass** in einer Speichereinrichtung wenigstens ein Korrekturwert zur Berücksichtigung des wenigstens einen Neigungswinkels vorgesehen ist.

26. Vorrichtung nach einem der vorhergehenden Ansprüche, **dadurch gekennzeichnet, dass** zwischen einem ersten und einem zweiten Gehäuseabschnitt eine Trennwand (19) vorgesehen ist, welche einen erheblichen Teil der freien Querschnittsfläche verschließt.

27. Vorrichtung nach dem vorhergehenden Anspruch, **dadurch gekennzeichnet, dass** die Trennwand (19) wenigstens 50 % der Fläche, insbesondere wenigstens 75 % der Fläche verschließt.

28. Vorrichtung nach dem Anspruch 26 oder 27, **dadurch gekennzeichnet, dass** die Trennwand (19) den oberen Teil der Querschnittsfläche verschließt.

## Claims

1. A device (100) for measuring the mass flow rate of a foaming fluid (1), in particular of milk during the milking process, having
a housing (50) with at least one inlet (4) and at least one outlet (5), and at least one measuring device (7) with at least one sensor for determining the mass flow rate,
**characterized in that**
the structure of the housing (50) is such that a helical flow of the liquid can be obtained in order to obtain mixing of the foam portion with the liquid portion of the fluid,
**in that** the housing (50) comprises at least one housing section (51) with an oval or round cross section and a second housing section (52) with a round or oval cross section, wherein a central axis (56) of the first housing section (51) and a central axis (57) of the second housing section (52) are disposed at an angle with respect to each other, wherein the angle is up to 90° and preferably between 10° and 60°, and wherein the inlet feeds substantially tangentially into the interior of the first housing section (51), and wherein the sensor is disposed in the second housing section (52), and the interior of the second housing section (52) of the housing (50) is rotationally symmetrical in form upstream of the sensor.

2. The device as claimed in claim 1, **characterized in that** the structure of the housing is such that the interior of the housing is substantially rounded in configuration, at least in the region of the inlet.

3. The device as claimed in claim 1 or claim 2, **characterized in that** the structure of the housing is such that the housing is inclined with respect to the horizontal, at least in the region of the inlet.

4. The device as claimed in at least one of the preceding claims, **characterized in that** an angle of inclination in the region of the inlet is between 10° and 60°.

5. The device as claimed in at least one of the preceding claims, **characterized in that** a central section of the housing between the inlet and outlet is disposed at an angle to the horizontal such that automatic discharging takes place.

6. The device as claimed in at least one of the preceding claims, **characterized in that** the inlet leads into the housing at an inclination.

7. The device as claimed in at least one of the preceding claims, **characterized in that** the measuring device has at least one device which is selected from a group of devices which includes an optical device, an electrical device, an acoustic device and a magnetic device.

8. The device as claimed in the preceding claim, **characterized in that** at least one measuring device comprises at least one electrical device which comprises a first and at least one second electrode, an electrical means and an analytical device.

9. The device as claimed in the preceding claim, **characterized in that** the first and the second electrodes are disposed in a region of a measuring section and extend over at least a part of the height of the measuring section.

10. The device as claimed in claim 8 or claim 9, **characterized in that** a quantity of electricity can be applied to the first electrode by means of the electrical means.

11. The device as claimed in one of the preceding claims, **characterized in that** at least one constriction to flow is provided in the housing.

12. The device as claimed in the preceding claim, **characterized in that** the at least one constriction to flow is at least one aperture.

13. The device as claimed in claim 11 or claim 12, **characterized in that** the at least one constriction to flow has a cross section which varies with height.

14. The device as claimed in claim 13, **characterized in that** the cross section increases with height above the base.

15. The device as claimed in at least one of claims 11 to 14, **characterized in that** a clear distance in the narrowest region of the flow constriction is more than 2 mm, preferably more than approximately 5 mm and particularly preferably more than the diameter of a typical maize kernel.

16. The device as claimed in at least one of claims 12 to 15, **characterized in that** the aperture is disposed at an inclination to the direction of flow.

17. The device as claimed in the preceding claim, **characterized in that** the aperture is upwardly inclined in the direction of flow.

18. The device as claimed in at least one of claims 11 to 17, **characterized in that** the cross section of the flow constriction is substantially trapezoidal and/or V-shaped and/or U-shaped in configuration.

19. The device as claimed in at least one of claims 12 to 18, **characterized in that** an inlet region at the flow constriction is substantially trapezoidal and/or V-shaped and/or U-shaped in configuration in top view.

20. The device as claimed in at least one of the preceding claims, **characterized in that** a cross section of the measuring section tapers off in the direction of flow.

21. The device as claimed in one of the preceding claims, **characterized in that** a bypass is provided between the inlet and outlet in order to stabilise a pressure over the measuring section.

22. The device as claimed in one of the preceding claims, **characterized in that** at least one third electrode is provided.

23. The device as claimed in the preceding claim, **characterized in that** the third electrode protrudes into the measuring section from above.

24. The device as claimed in one of the preceding claims, **characterized in that** at least one inclination sensor is provided for determining at least one angle of inclination.

25. The device as claimed in one of the preceding claims, **characterized in that** at least one correction parameter is provided in a storage device in order to take the at least one angle of inclination into consideration.

26. The device as claimed in one of the preceding claims, **characterized in that** a partition wall (19) is provided between a first and a second housing section and closes off a substantial portion of the free cross sectional area.

27. The device as claimed in the preceding claim, **characterized in that** the partition wall (19) closes off at least 50% of the area, in particular at least 75% of the area.

28. The device as claimed in claim 26 or claim 27, **characterized in that** the partition wall (19) closes off the upper portion of the cross sectional area.

## Revendications

1. Dispositif (100) servant à mesurer le débit massique d'un fluide moussant (1), en particulier de lait, pendant le processus de traite, comportant un boîtier (50) doté d'au moins une arrivée (4) et d'au moins une sortie (5), et au moins un dispositif de mesure (7) comportant au moins un capteur pour la détermination du débit massique,
**caractérisé en ce que**
le boîtier (50) est structuré de manière à ce qu'un flux de forme hélicoïdale de liquide soit obtenu pour obtenir un mélange de la partie moussante avec la partie liquide du fluide,
du fait que le boîtier (50) comprend au moins une première section de boîtier (51) de section transversale ovale ou ronde et une seconde section de boîtier (52) de section transversale ronde ou ovale, un axe central (56) de la première section de boîtier (51) et un axe central (57) de la seconde section de boîtier (52) étant disposés en angle l'un par rapport à l'autre, l'angle s'élevant jusqu'à 90° et de préférence s'élevant à 10° à 60°, et l'arrivée rentrant sensiblement tangentiellement dans la première section de boîtier (51), et le capteur étant disposé dans la seconde section de boîtier (52), et la seconde section de boîtier (52) du boîtier (50) étant de conformation symétrique en rotation à l'intérieur en amont du capteur.

2. Dispositif selon la revendication 1, **caractérisé en ce que** le boîtier est structuré de manière à ce que, au moins au niveau de l'arrivée, le boîtier soit à l'intérieur sensiblement de conformation arrondie.

3. Dispositif selon la revendication 1 ou 2, **caractérisé en ce que** le boîtier est structuré de manière à ce que, au moins au niveau de l'arrivée, le boîtier soit incliné par rapport à l'horizontale.

4. Dispositif selon une des revendications précédentes, **caractérisé en ce qu'**un angle d'inclinaison se monte, au niveau de l'arrivée, à 10° à 60°.

5. Dispositif selon une des revendications précédentes, **caractérisé en ce qu'**une section centrale du boîtier disposée entre l'arrivée et la sortie suivant un angle par rapport à l'horizontale tel qu'il y ait une autovidange.

6. Dispositif selon une des revendications précédentes, **caractérisé en ce que** l'arrivée mène obliquement dans le boîtier.

7. Dispositif selon une des revendications précédentes, **caractérisé en ce que** le dispositif de mesure présente au moins un dispositif qui est sélectionné dans un groupe de dispositifs qui comprend un dispositif optique, un dispositif électrique, un dispositif acoustique et un dispositif magnétique.

8. Dispositif selon la revendication précédente, **caractérisé en ce qu'**au moins un dispositif de mesure comprend au moins un dispositif électrique qui comprend une première et au moins une deuxième électrode, un moyen électrique et un dispositif d'exploitation.

9. Dispositif selon la revendication précédente, **caractérisé en ce que** la première et la deuxième électrodes sont disposées dans une zone d'un parcours de mesure et s'étendent sur au moins une partie de la hauteur du parcours de mesure.

10. Dispositif selon la revendication 8 ou 9, **caractérisé en ce qu'**un paramètre électrique peut être affecté à la première électrode au moyen du moyen électrique.

11. Dispositif selon une des revendications précédentes, **caractérisé en ce qu'**il est prévu au moins un rétrécissement d'écoulement dans le boîtier.

12. Dispositif selon une des revendications précédentes, **caractérisé en ce qu'**au moins un rétrécissement d'écoulement est au moins un diaphragme.

13. Dispositif selon la revendication 11 ou 12, **caractérisé en ce qu'**au moins un rétrécissement d'écoulement présente une section transversale variable au-delà de la hauteur.

14. Dispositif selon la revendication 13, **caractérisé en ce que** la section transversale augmente au-dessus du sol suivant la hauteur.

15. Dispositif selon au moins une des revendications 11 à 14, **caractérisé en ce qu'**une distance libre dans la zone la plus étroite du rétrécissement d'écoulement est supérieure à 2 mm, de préférence supérieure à environ 5 mm et très préférentiellement supérieure au diamètre d'un grain de maïs typique.

16. Dispositif selon au moins une des revendications 12 à 15, **caractérisé en ce que** le diaphragme est disposé incliné par rapport au sens d'écoulement.

17. Dispositif selon la revendication précédente, **caractérisé en ce que** le diaphragme est disposé en inclinaison montante dans le sens d'écoulement.

18. Dispositif selon moi une des revendications 11 à 17, **caractérisé en ce que** la section transversale du rétrécissement d'écoulement est conformée sensiblement en forme de trapèze et/ou en forme de V et/ou en forme de U.

19. Dispositif selon au moins une des revendications 12 à 18, **caractérisé en ce qu'**une zone d'arrivée est réalisée au niveau du rétrécissement d'écoulement en une forme sensiblement trapézoïdale et/ou en forme de V et/ou en forme de U vue du dessus.

20. Dispositif selon une des revendications précédentes, **caractérisé en ce qu'**une section transversale du parcours de mesure se rétrécit dans le sens d'écoulement.

21. Dispositif selon une des revendications précédentes, **caractérisé en ce qu'**une dérivation est prévue entre l'arrivée et la sortie pour stabiliser une pression au-dessus du parcours de mesure.

22. Dispositif selon une des revendications précédentes, **caractérisé en ce qu'**au moins une troisième électrode est prévue.

23. Dispositif selon la revendication précédente, **caractérisé en ce que** la troisième électrode rentre par le haut dans le parcours de mesure.

24. Dispositif selon une des revendications précédentes, **caractérisé en ce qu'**au moins un capteur d'inclinaison est prévu pour déterminer au moins un angle d'inclinaison.

25. Dispositif selon une des revendications précédentes, **caractérisé en ce que**, dans un dispositif de mémoire, au moins une valeur corrective est prévue pour tenir compte de l'au moins un angle d'inclinaison.

26. Dispositif selon une des revendications précédentes, **caractérisé en ce que**, entre les première et seconde sections de boîtier, il est prévu une paroi séparatrice (19) qui ferme une partie importante de la surface de section transversale libre.

27. Dispositif selon une des revendications précédentes, **caractérisé en ce que** la paroi séparatrice (19) ferme au moins 50% de la surface, en particulier au moins 75% de la surface.

28. Dispositif selon la revendication 26 ou 27, **caractérisé en ce que** la paroi séparatrice (19) ferme la partie supérieure de la surface de section transversale.
